# EUROPÄISCHE PATENTSCHRIFT

(11) **EP 1 181 460 B1**
(45) Veröffentlichungstag und Bekanntmachung des Hinweises auf die Patenterteilung: **09.06.2004**
(21) Anmeldenummer: 01940298.1
(22) Anmeldetag: 06.04.2001
(51) Int. Cl.: F16B 5/02

(54) **VERBINDUNGSVORRICHTUNG**
CONNECTING DEVICE
DISPOSITIF D'ASSEMBLAGE

(30) Priorität: 08.04.2000 DE 10017674; 05.04.2001 DE 10117851
(43) Veröffentlichungstag der Anmeldung: 27.02.2002
(73) Patentinhaber: Witte-Velbert GmbH & Co. KG, 42551 Velbert (DE)
(72) Erfinder: KLÜTING, Bernd, 42477 Radevormwald (DE)
(74) Vertreter: Grundmann, Dirk, Dr.
(86) Internationale Anmeldenummer: PCT/EP2001/003964
(87) Internationale Veröffentlichungsnummer: WO 2001/077535

(56) Entgegenhaltungen:
- EP-A- 0 955 479
- DE-C- 4 412 431

## Beschreibung

Die Erfindung betrifft eine Vorrichtung zum verspannenden Verbinden in einer Abstandsstellung zueinander liegender Bauteile mittels Verbindungsschraube, bestehend aus einem am ersten Bauteil mittels Befestigungselementen festlegbaren Stützteil und einem durch Drehen gegenüber dem Stützteil axial verlagerbaren Distanzteil, welches beim Einschrauben der in eine Öffnung des Distanzstückes eingesteckten Verbindungsschraube zufolge reibschlüssiger Anlage der Schraubenbolzenmantelfläche an in die Öffnung ragende Federelemente bis zum Anschlag an das zweite Bauteil mitgeschleppt wird.

Derartige Verbindungsrichtungen sind beispielsweise aus der EP 0 176 663, der DE 4 224 575 A1, der DE 36 20 005 C1 und der DE 44 12 431 C1 bekannt. Die bekannte Verbindungsvorrichtung besitzt zwei Teile, welche aus einer Mehrzahl von einzelnen insbesondere werkstoffverschiedenen Komponenten bestehen. Diese Teile sind mit einem Gewinde miteinander verbunden. Das eine Teil bildet ein Stützteil aus und ist mit einem ersten Bauteil verbindbar. Das zweite Teil, welches das Distanzteil ausbildet, ist mit einem linksgängigen Gewinde mit dem Stützteil verschraubt und bildet eine Stirnfläche aus, die in einer Abstandsstellung liegt zum zweiten Bauteil. Beim Einstecken der Verbindungsschraube in das Distanzteil legen sich die Federelemente in reibende Anlage an den Schraubenbolzen. Wird jetzt die Schraube gedreht, so spindelt sich das Distanzteil aus dem Stützteil heraus, weil es vom Schraubenbolzen reibschlüssig mitgeschleppt wird. Das Stützteil spindelt sich bis in die Anlagestellung zum zweiten Bauteil. Danach ist die Reibkraft, mit welcher Federelemente an der Schraubenbolzenmantelfläche anliegen, geringer als die Distanzierungskraft bzw. die Gewindereibung zwischen den Gewindegängen von Distanzteil und Stützteil, so dass die Schraube weiter durch die Öffnung der beiden ineinandergeschraubten Teile schraubbar ist, bis sie in das dem ersten oder dem zweiten Bauteil zugeordnete Gegengewinde eingreift, um die beiden Bauteile miteinander zu verspannen, die ansonsten zufolge der beiden in die Distanzstellung gebrachten Vorrichtungsteile gegeneinander abgestützt sind. Die Befestigung ist auch in einer Variante möglich, so kann die Verbindungsschraube zunächst bis an das Gegengewinde durch die Öffnung der beiden Vorrichtungsteile hindurchgesteckt werden. Mit dem Einschrauben der Verbindungsschraube in das Gegengewinde erfolgt dann das reibschlüssig mitgeschleppte Ausspindeln der beiden Vorrichtungsbauteile, bis das Distanzteil in die Anlagestellung zum zweiten Bauteil tritt. Es sind zwei Varianten möglich. Bei der ersten Variante verlagert sich das Distanzteil entgegen der Einschraubrichtung in die Anlagestellung. Bei der zweiten Variante wird das Distanzteil von der Schraubendrehung in gleicher Richtung reibschlüssig mitgeschleppt.

Der Erfindung liegt die Aufgabe zugrunde, eine gattungsgemäße Vorrichtung herstellungstechnisch zu vereinfachen.

Gelöst wird die Aufgabe durch die in den Ansprüchen angegebene Erfindung.

Der Anspruch 1 sieht zunächst vor, dass sowohl Stützteil als auch Distanzteil einstückig als Gewindebüchsen geformt sind. Sie können dabei aus Kunststoff oder aus Metall bestehen. Die Fertigung kann durch Tiefziehen erfolgen. Die Vorrichtung wird jetzt aus zwei Rohlingen gefertigt. Beide Rohlinge liegen als Flachstücke, insbesondere Bleche vor. Diese werden zunächst tiefgezogen. Die Befestigungselemente und die Federelemente werden jeweils von dem Blech ausgebildet. Dies erfolgt bevorzugt durch einen Freischnitt. Das Freischneiden kann sowohl vor, als auch nach dem Tiefziehen erfolgen. In einer bevorzugten Ausgestaltung der Erfindung wird auf den Wandungen der Gewindebüchsen jeweils ein Gewinde aufgeformt. Die Gewinde besitzen derartige Steigungen bzw. Gewindegangquerschnittsformen, dass die beiden Gewindebüchsen ineinanderschraubbar sind. Vorzugsweise ist die Gewindebüchse des Distanzteiles in die Gewindebüchse des Stützteiles einschraubbar. Es hat sich fertigungstechnisch als vorteilhaft herausgestellt, wenn die Gewinde aufgerollt werden. Sowohl das Stützteil, als auch das Distanzteil besitzen bevorzugt an einem Büchsenrand einen nach außen ragenden Ringkragen. Dieser Ringkragen bildet die Anlageflächen aus, mit denen einerseits das Stützteil und andererseits das Distanzteil mit dem zugehörigen Bauteil zusammenwirkt, insbesondere befestigbar ist. Die Befestigungselemente sind vorzugsweise von außen her aus dem Ringkragen freigeschnittene Zungen. Diese stehen auf der der Büchse gegenüberliegenden Seite des Ringkragens vor und können in eine Befestigungsöffnung eingeklipst werden. Die Federelemente sind aus einem an den Ringkragen angrenzenden, insbesondere gewindefreien Büchsenabschnitt freigeschnitten. Die Flanken der Gewindegänge liegen vorzugsweise in einem Winkel von 60° zueinander. In einer Weiterbildung der Erfindung kann vorgesehen sein, dass die Gewindeabschnitte der beiden Bauteile kunststoffummantelt bzw. kunststoffhinterfüttert sind. Die beiden insbesondere materialeinheitlichen Teile, Stützteil und Distanzteil können weiter insgesamt aus Blech oder komplett aus Kunststoff bestehen. Ferner kann vorgesehen sein, dass das Befestigungselement als Clip ausgebildet ist. Dabei ist insbesondere vorgesehen, dass eine Gegenplatte zum Kragen parallel verläuft, welche einstückig mit dem Kragen verbunden ist und eine U-förmige Abwinklung ausbildet. Fluchtend zu den Gewindebüchsen bildet diese Gegenplatte eine Verbindungsschraubendurchstecköffnung aus. Ferner kann vorgesehen sein, dass einer der beiden Gewindebüchsen eine Anschlaglasche angeformt ist. Diese kann ebenfalls als Zunge ausgebildet sein. Diese Anschlaglasche bildet zusammen mit einem Gegenanschlag des anderen Teiles eine Drehanschlagbegrenzung aus. Der Gegenanschlag kann von einem freigeschnittenen Abschnitt eines Kragens ausgebildet sein.

Ferner ist vorgesehen, dass die beiden Gewindebüchsen im Spritzgussverfahren geformt sind. Die Spritzlinge weisen dabei insbesondere Ringkrägen auf. In einer bevorzugten Ausgestaltung der Erfindung besitzen die Gewindebüchsen auf ihrer dem gewindeabgewandten Seite glattwandige Oberflächen. Ferner kann vorgesehen sein, dass das Innengewinde in Umfangsrichtung bereichsweise unterbrochen ist. Bevorzugt können vier in gleichmäßiger Umfangsverteilung angeordnete gewindefreie Zonen vorgesehen sein.

Die Erfindung besteht in vorteilhafter Weise aus nur zwei materialeinheitlichen, d.h. aus nicht wiederum zusammengesetzten Teilen. Jedes Teil ist einstückig gefertigt.

Ausführungsbeispiele der Erfindung werden nachfolgend anhand beigefügter Zeichnungen erläutert. Es zeigen:
- Fig. 1: eine Schnittdarstellung einer erfindungsgemäßen Vorrichtung im Montagezustand,
- Fig. 2: in einer Schnittdarstellung das Stützteil,
- Fig. 3: das Stützteil in der Draufsicht auf den Ringkragen,
- Fig. 4: das Distanzteil im Längsschnitt,
- Fig. 5: das Distanzteil in der Draufsicht auf den Ringkragen,
- Fig. 6: die zusammengeschraubte Schnittdarstellung eines zweiten Ausführungsbeispiel,
- Fig. 7: das Stützteil des zweiten Ausführungsbeispiels,
- Fig. 8: das Distanzteil des zweiten Ausführungsbeispiels,
- Fig. 9: die Draufsicht auf den Kragen des Distanzteils,
- Fig. 10: das zweite Ausführungsbeispiel in der Seitenansicht,
- Fig. 11: ein drittes Ausführungsbeispiel der Erfindung, bei welchem die beiden Teile als Kunststoffspritzgussteile gefertigt sind,
- Fig. 12: das Ausführungsbeispiel gemäß Figur 11 in einer Draufsicht auf das Spritzteil,
- Fig. 13: eine Darstellung gemäß Figur 12 einer Variante und
- Fig. 14: eine weitere Variante in einer Darstellung gemäß Figur 11.

Die in den ersten Ausführungsbeispielen dargestellte Vorrichtung besteht aus zwei Blechformteilen 3, 4. Das mit der Bezugsziffer 3 bezeichnete Stützteil ist ebenso, wie das mit der Bezugsziffer 4 bezeichnete Distanzteil aus einem Blechstück durch Tiefziehen und anschließende Form- und Schneidbearbeitung hergestellt. Es ist bevorzugt vorgesehen, dass in das Blechstück zunächst Freischnitte eingestanzt werden, aus welchen anschließend die Befestigungszungen bzw. die Federzungen ausgebogen werden können.

Die Gewindebüchsen 6, 7 sind durch Tiefziehen erzeugt.

Das Stützteil 3 besitzt einen Ringkragen 10. In diesen Ringkragen sind von außen her Schlitze eingebracht, mittels welche die Befestigungszungen 8 freigeschnitten sind. Diese Befestigungszungen, die sich diametral gegenüberliegen, sind quer zur Stirnfläche des Ringkragens 10 abgebogen. Auf der gegenüberliegenden Stirnseite des Ringkragens 10 erstreckt sich die Büchse 6. Zunächst grenzt an den Kragen 10 ein gewindefreier Abschnitt 12 an. An diesen gewindefreien Abschnitt 12 erstreckt sich eine Gewindebüchse 6. Die Gewindegänge haben einen Abstand von 1,5 mm. Die Gewindeflanken nehmen einen Winkel von etwa 60° zueinander ein. Die Scheitel der Gewindeflanken sind gerundet.

Das Distanzteil 4 besitzt ebenfalls einen Ringkragen 11. Aus diesem Ringkragen 11 ragen radial einwärts die aus einem gewindefreien Abschnitt 13 freigeschnittenen Federzungen 9 ab. Diese Federzungen 9 liegen sich diametral gegenüber und haben eine lichte Weite, die geringer ist als der Durchmesser des Gewindebolzenabschnittes der Verbindungsschraube 5.

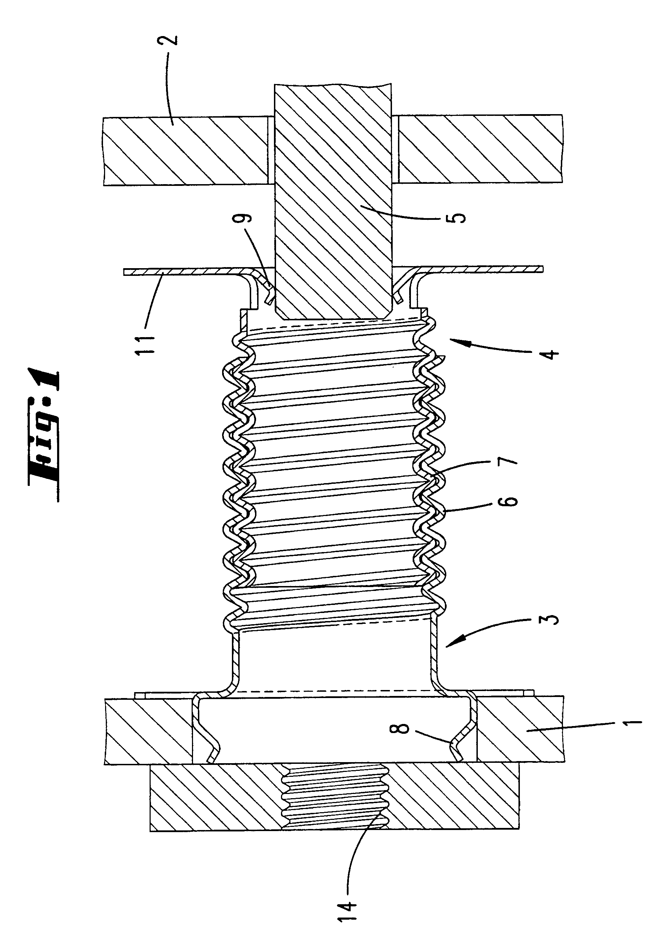

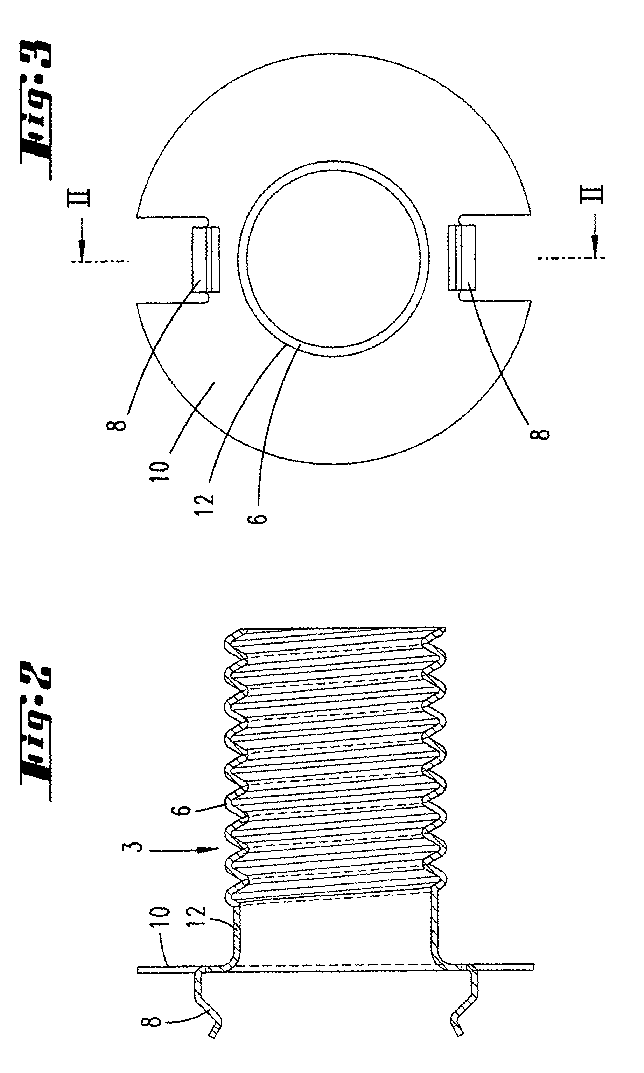

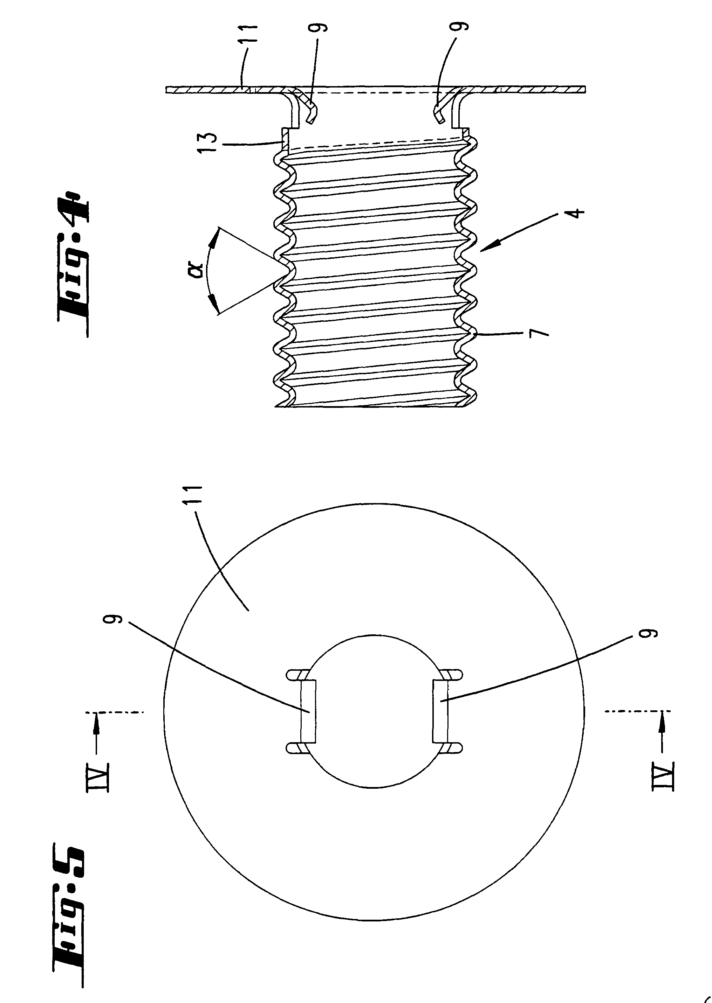

An den sich an den Kragen 11 anschließenden gewindefreien Abschnitt 13 schließt sich ein Gewindeabschnitt 7 an. Auch dieser Gewindeabschnitt wird durch Rollen erzeugt. Die Gewindesteigung beträgt auch hier 1,5 mm. Die Flanken der Gewindegänge haben auch hier einen Flankenwinkel von 60°. Die Scheitel der Gewindegänge sind derart gerundet, dass das Gewinde 7 in das Innengewinde 6 eingeschraubt werden kann, wie es in der Figur 1 dargestellt ist.

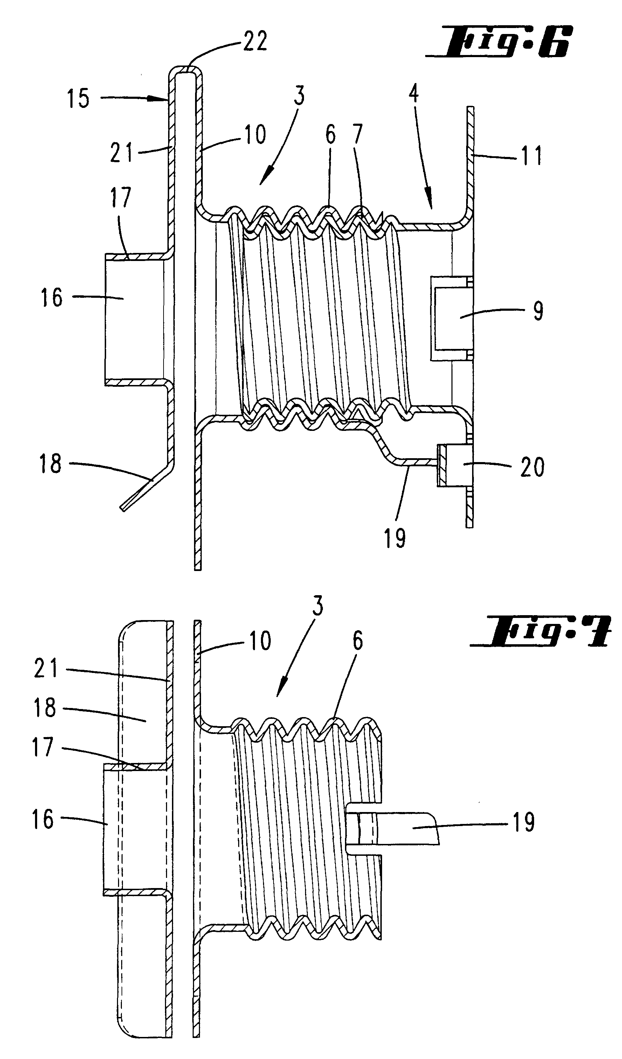

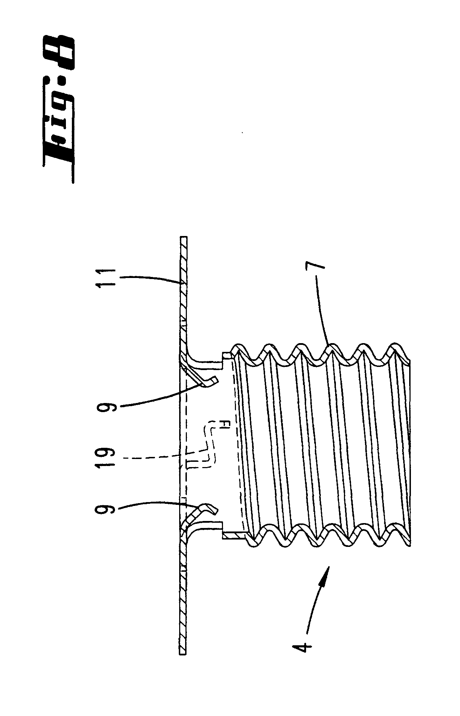

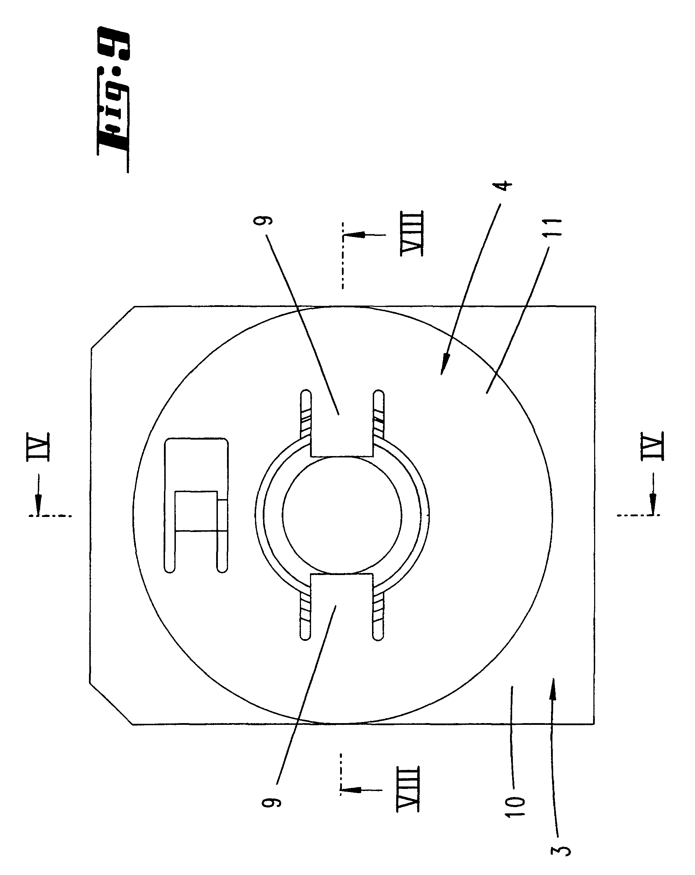

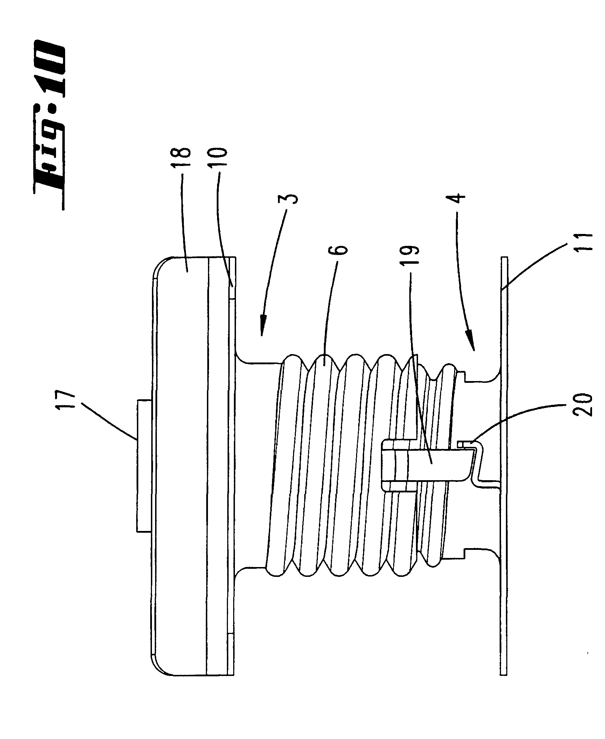

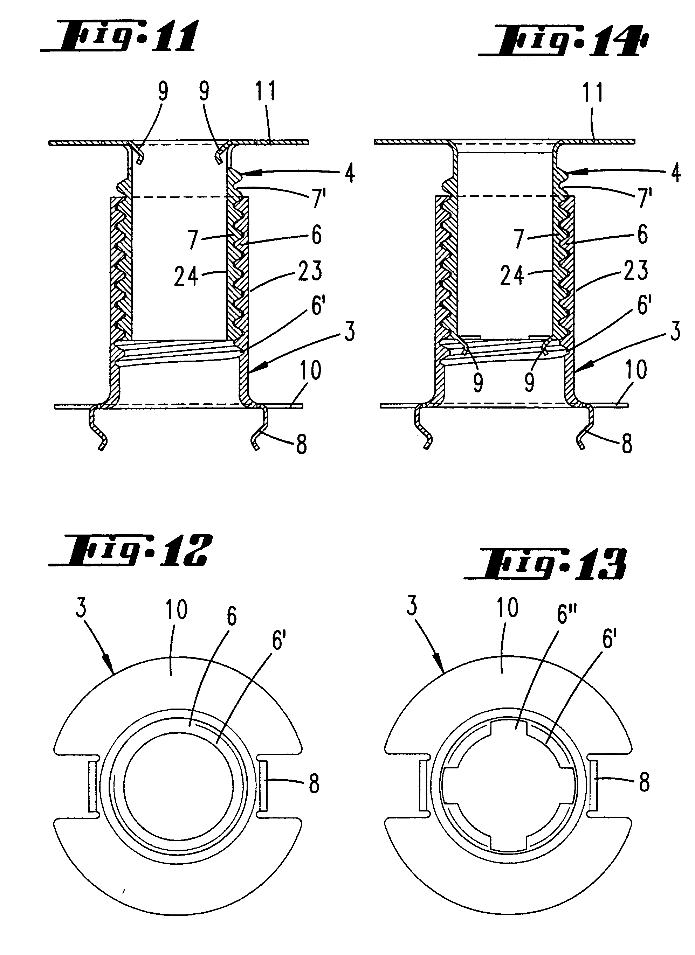

Bei dem in den Figuren 6 bis 10 dargestellten Ausführungsbeispiel hat das Befestigungselement eine abgewandelte Gestalt. Hierbei weist der Kragen 10 einen rechteckigen Grundriss auf. Parallel zum Kragen 10 erstreckt sich eine Gegenplatte 21, welche mit dem Kragen 10 über einen Verbindungssteg 22 verbunden ist. Kragen 10, Steg 22 und Gegenplatte 21 sind materialeinheitlich und von einem U-förmig gebogenen Blech gestaltet, so dass ein Befestigungsclip 15 ausgebildet ist, welcher über einen Rand eines Bauteiles geschoben werden kann. Das Bauteil findet dann Aufnahme zwischen Kragen 10 und Gegenplatte 21.

In fluchtender Gegenüberlage zu den beiden Gewindebüchsen 6, 7 bildet die Gegenplatte 21 eine Schraubendurchtrittsöffnung 16 aus. Diese ist im Ausführungsbeispiel mit einem Hals 17 versehen. Der Hals 17 kann Träger eines Gegengewindes für die Verbindungsschraube 5 sein.

Als materialeinheitliche Verlängerung bildet die Gewindebüchse 6 eine Anschlaglasche 19 aus. Diese ragt über die Stirnkante der Gewindebüchse 6 hinweg und liegt vor einem Gegenanschlag 20, welcher als Zunge aus dem Kragen 11 des Distanzteiles 4 ausgeschnitten ist. Zufolge der Anlage der Anschlaglasche 19 vor dem Gegenanschlag 20 sind die beiden Teile 3, 4 in ihrer Montagestellung drehgehemmt gehalten. Um das Distanzteil 4 gegenüber dem Stützteil 3 verdrehen zu können, muss die Anschlaglasche 19 über den Gegenanschlag 20 gebracht werden. Da der Gegenanschlag 20 federnd ausweichen kann, ist hierzu eine geringe Kraft notwendig.

Die Funktionsweise der Vorrichtung ist die folgende: Im Grundzustand sind die beiden Gewinde 6, 7 vollständig ineinander geschraubt, so dass die Ringkragen 10, 11 ihren geringsten Abstand besitzen. Die Anschlaglasche 19 liegt vor dem Gegenanschlag 20. In diesem Zustand wird die Vorrichtung in einer Montageöffnung eines ersten Bauteiles eingesteckt. Eine Fixierung erfolgt mittels der Befestigungszungen 8 in der Öffnungswandung oder mittels Clips 15 an einem Bauteilrand. Das Bauteil 2 ist vom Bauteil 1 weiter beabstandet, als der Abstand zwischen den beiden Kragen 10, 11. Durch eine Öffnung des Bauteils 2 wird nun der Gewindebolzen einer Verbindungsschraube 5 eingesteckt. Die Verbindungsschraube 5 wird in das Distanzteil 4 eingesteckt, bis das Gewinde an das Einschraubgewinde 14 herantritt. Die Federzungen liegen dabei in reibschlüssiger Anlage an dem Gewindebolzenmantel der Verbindungsschraube 5.

Wird jetzt die Verbindungsschraube 5 gedreht, so schrauben sich die beiden ineinandergeschraubten, linksgängigen Gewinde 6, 7 auseinander, während die mit einem Rechtsgewinde versehene Verbindungsschraube 5 sich in das Einschraubgewinde 14 einschraubt. Zufolge der reibschlüssigen Mitnahme des Distanzteiles 4 beim Drehen der Verbindungsschraube 5 spindelt sich der Kragen 11 des Distanzteiles 4 bis in eine Anlagestellung an das Bauteil 2. Die Federkraft des Gegenanschlages 20 ist geringer, als die Reibkraft der Federzunge 9 an dem Gewindebolzen der Verbindungsschraube 5.

Die in den Figuren 11 bis 14 dargestellten Ausführungsbeispiele besitzen jeweils zwei Bestandteile, nämlich das Stützteil 3 und das Distanzteil 4, welche als Kunststoffspritzgussteile gefertigt sind. Die Figur 11 zeigt die beiden Spritzgussteile in einer Schnittdarstellung im zusammengeschraubten Zustand. Das Stützteil 3 besitzt eine Gewindebüchse 6, welchem ein Kragen 10 angeformt ist. Diesem Kragen 10 sind wiederum die Befestigungszungen 8 angeformt. Die Gewindebüchse 6 besitzt ein Innengewinde 6'. Die dem Innengewinde 6' gegenüberliegende Büchsenwandung 23 ist glatt. In das Innengewinde 6' ist das Außengewinde 7' der Gewindebüchse 7 eingeschraubt, die von dem Distanzteil 14 gebildet ist. Dieser Gewindebüchse 7 ist ebenfalls ein Kragen 11 materialeinheitlich angeformt. Dieser Kragen bildet die Federzunge 9 aus, die sich reibschlüssig an die Gewindegänge der Befestigungsschraube anlegen können. Die dem Außengewinde 7' gegenüberliegende Innenwandung 24 der Gewindehülse 7 ist glatt.

Das in der Figur 12 dargestellte Ausführungsbeispiel besitzt ein in Umfangsrichtung durchgehendes Innengewinde.

Figur 13 zeigt eine Variante eines Stützteiles 3. Dort ist das Innengewinde 6' in Umfangsrichtung unterbrochen. Es sind insgesamt in Umfangsrichtung gleichmäßig verteilt vier gewindefreie Zonen 6'' vorgesehen. Diese gewindefreien Zonen 6'' erstrecken sich in Axialrichtung der Gewindebüchse 6.

Während bei dem in Figur 11 dargestellten Ausführungsbeispiel die Federzungen 9 dem Kragen 11 zugeordnet sind, sind beim Ausführungsbeispiel gemäß Figur 14 die Federzungen 9 dem Boden der Gewindebüchse 7 des Distanzteiles 4 zugeordnet.

Die bodenseitige Zuordnung der Federzungen kann auch bei den zuvor beschriebenen Tiefziehteilen vorgesehen sein. Insbesondere können die Federzungen 9 dort durch Freistanzen der Bodenöffnung gefertigt sein. Dies kann im einfachsten Falle dadurch erfolgen, dass der geschlossene Boden einen Kreuz-Einschnitt erfährt, so dass sich beim erstmaligen Durchstecken der Verbindungsschraube 4 Federlaschen ausbiegen.

In einem nicht dargestellten Ausführungsbeispiel ist vorgesehen, dass die Gewindebüchse 6 des Stützteiles außenseitig mit Kunststoff ummantelt ist. Dies gibt dem Stützteil 3 nicht nur ein gefälligeres Aussehen, sondern trägt auch zur Stabilisierung bei. In analoger Weise kann die Inneseite der Gewindebüchse 7 des Distanzteiles 4 ebenfalls mit einer Kunststoffhülse versehen sein, durch welche die Verbindungsschraube 5 geschraubt werden kann.

In einem weiteren nicht dargestellten Ausführungsbeispiel ist vorgesehen, dass die Gewindebüchsen 6, 7 Rechtsgewinde beinhalten. Dann kann die Verbindungsschraube von der anderen Seite durchgesteckt werden.
Das Distanzstück wird dann in Einschraubrichtung mitgeschleppt.

## Patentansprüche

1. Vorrichtung zum verspannenden Verbinden in einer Abstandsstellung zueinander liegender Bauteile (1, 2) mittels Verbindungsschraube (5), bestehend aus einem am ersten Bauteil (1) mittels Befestigungselementen (8) festlegbaren Stützteil (3) und einem durch Drehen gegenüber dem Stützteil (3) axial verlagerbaren Distanzteil (4), welches beim Einschrauben der in eine Öffnung des Distanzteiles eingesteckten Verbindungsschraube (5) zufolge reibschlüssiger Anlage der Schraubenbolzenmantelfläche der Schraube an in die Öffnung ragende Federelemente (9) bis zum Anschlag an das zweite Bauteil (2) mitgeschleppt wird, wobei sowohl das Stützteil (3) als auch das Distanzteil (4) einstückig geformte Gewindebüchsen (6, 7) sind, und die Befestigungselemente (8) und die Federelemente (9) Teile desjeweiligen Formlings sind, **dadurch gekennzeichnet, dass** die Befestigungselemente (8) und die Federelemente (9) von freigeschnittene Zungen des jeweiligen Formlings gebildet sind.

2. Vorrichtung nach Anspruch 1, **dadurch gekennzeichnet, dass** den Wandungen der Gewindebüchsen (6, 7) durch Aufrollen ineinanderschraubbare Gewinde aufgeformt sind.

3. Vorrichtung nach einem der vorhergehenden Ansprüche, **dadurch gekennzeichnet, dass** Stützteil (3) und Distanzteil (4) jeweils am Büchsenrand eine von einem nach außen abragenden Ringkragen (10, 11) ausgebildete Stützfläche ausbilden.

4. Vorrichtung nach einem der vorhergehenden Ansprüche, **dadurch gekennzeichnet, dass** die Befestigungselemente (8) von außen aus dem Ringkragen (10) freigeschnitten sind.

5. Vorrichtung nach einem der Ansprüche 3 oder 4, **dadurch gekennzeichnet, dass** die Federelemente (9) aus einem an dem Ringkragen (11) angrenzenden, insbesondere gewindefreien Büchsenabschnitt (13) freigeschnitten sind.

6. Vorrichtung nach einem der vorhergehenden Ansprüche, **dadurch gekennzeichnet, dass** die Gewindeflanken einen Winkel von 60° zueinander einschliessen.

7. Vorrichtung nach einem der vorhergehenden Ansprüche, **dadurch gekennzeichnet, dass** der Büchsenabschnitt (6) des Stützteiles (3) kunststoffummantelt und/oder die Innennseite der Gewindebüchse (7) des Distanzteiles (4) kunststoffhinterfüttert ist.

8. Vorrichtung nach einem der vorhergehenden Ansprüche, **dadurch gekennzeichnet, dass** das Befestigungselement (8) als Clips (15) ausgebildet ist mit zum Kragen (10) des Stützteiles (3) parallel beabstandet verlaufende Gegenplatte (21) mit einer Verbindungsschraubendurchtrittsöffnung (16).

9. Vorrichtung nach einem der vorhergehenden Ansprüche, **dadurch gekennzeichnet, dass** die Verbindungsschraubendurchtrittsöffnung (16) einen Hals (17) ausbildet.

10. Vorrichtung nach einem der vorhergehenden Ansprüche, **gekennzeichnet durch** eine von der Gewindebüchse (7) des Distanzteiles (4) abragende Anschlaglasche (19), welche mit einem aus dem Kragen (11) des Stützteiles (3) freigeschnittenen Gegenanschlag (20) zusammenwirkt.

11. Vorrichtung nach einem der vorhergehenden Ansprüche, **dadurch gekennzeichnet, dass** die Formlinge (6, 7) aus jeweils einem Formblech tiefgezogene Tiefziehteile oder Spritzgußteile sind.

12. Vorrichtung nach einem der vorhergehenden Ansprüche, **dadurch gekennzeichnet, dass** das Innengewinde (6') zufolge Unterbrechungen in Umfangsrichtung gleichmäßiger Umfangsverteilung angeordnete gewindefreie Zonen (6'') ausbildet.

## Claims

1. Device for the bracing connection of spaced-apart components (1, 2) by means of a connecting screw (5), comprising a supporting part (3), which can be secured on the first component (1) by means of fastening elements (8), and a spacer part (4), which can be displaced axially in relation to the supporting part (3) by virtue of rotation and, as the connecting screw (5), fitted into an opening of the spacer part, is screwed in, is carried along, as a result of friction-fitting engagement of the lateral surface of the screw shank of the screw against resilient elements (9) projecting into the opening, until it strikes against the second component (2), both the supporting part (3) and the spacer part (4) being threaded bushings (6, 7) formed in one piece, and the fastening elements (8) and the resilient elements (9) forming parts of the respective shaped member, **characterized in that** the fastening elements (8) and the resilient elements (9) are formed by cut-out tongues of the respective shaped member.

2. Device according to Claim 1, **characterized in that** threads which can be screwed one inside the other are formed on the walls of the threaded bushings (6, 7) by virtue of being rolled thereon.

3. Device according to one of the preceding claims, **characterized in that** the supporting part (3) and spacer part (4) each form, on the bushing border, a supporting surface formed by an outwardly projecting annular collar (10, 11).

4. Device according to one of the preceding claims, **characterized in that** the fastening elements (8) are cut out of the annular collar (10) from the outside.

5. Device according to either of Claims 3 and 4, **characterized in that** the resilient elements (9) are cut out of an, in particular, thread-free bushing section (13) adjoining the annular collar (11).

6. Device according to one of the preceding claims, **characterized in that** the thread flanks enclose an angle of 60° in relation to one another.

7. Device according to one of the preceding claims, **characterized in that** the bushing section (6) of the supporting part (3) is sheathed in plastics and/or the inside of the threaded bushing (7) of the spacer part (4) is lined with plastics.

8. Device according to one of the preceding claims, **characterized in that** the fastening element (8) is formed as a clip (15) with a counter plate (21) which is spaced apart from, and parallel to, the collar (10) of the supporting part (3) and has a through-passage opening (16) for the connecting screw.

9. Device according to one of the preceding claims, **characterized in that** the through-passage opening (16) for the connecting screw forms a neck (17).

10. Device according to one of the preceding claims, **characterized by** a stop lug (19) which projects from the threaded bushing (7) of the spacer part (4) and interacts with a counter stop (20) which is cut out of the collar (11) of the supporting part (3).

11. Device according to one of the preceding claims, **characterized in that** the shaped members (6, 7) are injection mouldings or deep-drawn parts which are each deep drawn from a shaped metal sheet.

12. Device according to one of the preceding claims, **characterized in that**, as a result of interruptions, the internal thread (6') forms thread-free zones (6") distributed uniformly over the circumference in the circumferential direction.

## Revendications

1. Dispositif pour la liaison sous contrainte élastique de deux composants (1, 2) disposés dans une position à distance l'un de l'autre, aux moyens d'une vis de liaison (5), le dispositif se composant d'un pièce d'appui (3) susceptible d'être fixé au premier composant (1) aux moyens d'éléments (8) de fixation et d'une pièce d'écartement (4) qui est susceptible d'être déplacée par rotation axialement par rapport à la pièce d'appui (3), et qui par vissage de la vis de liaison (5) enfichée dans une ouverture de la pièce d'écartement, eSt entraînée jusqu'à la butée sur le deuxième composant (2) à la suite de l'appui à liaison de friction de la surface d'enveloppe de la tige de vis de la vis sur les éléments élastique (9) faisant saillie dans l'ouverture, aussi bien la pièce d'appui (3) qui également, la pièce d'écartement (4) étant constituées sous la forme de manchons filetés monobloc (6, 7), et les éléments de fixation (8) ainsi que les éléments élastiques (9) faisant partie des ébauches de forme de ces pièces correspondantes, **caractérisés en ce que** les éléments de fixation (8) et les éléments élastiques (9) sont formés par des languettes dégagées par découpe de l'ébauche de forme correspondante.

2. Dispositif selon la revendication 1, **caractérisé en ce que** les parois des manchons filetés (6, 7) sont formées par roulage des filetages susceptibles d'être vissés l'un dans l'autre.

3. Dispositif selon l'une des revendications précédentes, **caractérisé en ce que** la pièce d'appui (3) et la pièce d'écartement (4) forme chacune sur le bord du manchon une surface d'appui constituée par une collerette annulaire (10, 11) faisant saillie vers l'extérieur.

4. Dispositif selon l'une des revendications précédentes, **caractérisé en ce que** les éléments de fixation (8) sont dégagés des collerettes annulaires (10) vers l'extérieur par découpe.

5. Dispositif selon l'une des revendications 3 ou 4, **caractérisé en ce que** les éléments élastiques (9) sont dégagés par découpe d'un tronçon (13) de manchon délimitant la collerette annulaire (11) et en particulier exempte de filetage.

6. Dispositif selon l'une des revendications précédentes, **caractérisé en ce que** les flancs de filetage forment l'un par rapport à l'autre un angle de 60°.

7. Dispositif selon l'une des revendications précédentes, **caractérisé en ce que** le tronçon (6) de manchon de la pièce d'appui (3) est enrobé de matière plastique et/ou la face intérieure du manchon fileté (7) de la pièce d'écartement (4) est garnie de matière plastique.

8. Dispositif selon l'une des revendications précédentes, **caractérisé en ce que** l'élément de fixation (8) est réalisé comme une pince (15) comprenant une contreplaque (21) courant parallèlement à distance de la collerette (10) de la pièce d'appui (3) et muni d'une ouverture (16) de passage de la vis de liaison.

9. Dispositif selon l'une des revendications précédentes, **caractérisé en ce que** l'ouverture de passage (16) de la vis de liaison forme un col (17).

10. Dispositif selon l'une des revendications précédentes, **caractérisé par** une patte de butée (19) faisant saillie du manchon fileté (7) de la pièce d'écartement (4) et qui coopère avec une contre butée (20) dégagée par découpe de la collerette (11) de la pièce d'appui (3).

11. Dispositif selon l'une des revendications précédentes, **caractérisé en ce que** les ébauches de forme (6, 7) sont constituées chacune d'une pièce emboutie formée par emboutissage profonde d'une tôle profilée ou bien sont des pièces moulées par injection.

12. Dispositif selon l'une des revendications précédentes, **caractérisé en ce que** le filetage intérieur (6'), grâce à des interruptions dans la direction périphérique, forment des zones (6") exemptes de filetage et disposées selon une répartition périphériques régulières dans la direction périphériques.
